# EUROPÄISCHE PATENTSCHRIFT

(11) **EP 0 958 085 B1**
(45) Veröffentlichungstag und Bekanntmachung des Hinweises auf die Patenterteilung: **04.04.2001**
(21) Anmeldenummer: 98909329.9
(22) Anmeldetag: 03.02.1998
(51) Int. Cl.: B23C 5/20

(54) **SCHNEIDEINSATZ UND FRÄSWERKZEUG**
CUTTING INSERT AND MILLING TOOL
PLAQUETTE DE COUPE ET OUTIL DE FRAISAGE

(30) Priorität: 10.02.1997 DE 19704931; 21.08.1997 DE 19736379
(43) Veröffentlichungstag der Anmeldung: 24.11.1999
(73) Patentinhaber: Widia GmbH, 45145 Essen (DE)
(72) Erfinder: HEINLOTH, Markus, D-92353 Postbauer-Heng (DE); GESELL, Reinhold, D-91629 Weihenzell (DE); BÄR, Jürgen, D-90765 Fürth (DE)
(74) Vertreter: Vomberg, Friedhelm, Dipl.-Phys.
(86) Internationale Anmeldenummer: DE9800310
(87) Internationale Veröffentlichungsnummer: WO9834747

(56) Entgegenhaltungen:
- DE-A- 19 516 946
- FR-A- 2 105 966
- US-A- 4 789 273

## Beschreibung

Die Erfindung betrifft einen Schneideinsatz mit einem im wesentlichen kubischen Grundkörper, der als Wendeschneidplatte mit acht nutzbaren Schneidkanten ausgestattet ist, mit zwei parallel zueinander angeordneten, ebenen und von einem Befestigungsloch durchdrungenen größeren Flächen und vier hieran jeweils angrenzenden Seitenflächen, nämlich zwei parallel zueinanderliegenden stirnseitigen kleinen Endflächen und größeren Längsflächen, die jeweils mittig entlang ihrer Längsachse einen vorstehenden und als Anlagefläche beim Einspannen des Schneideinsatzes in einen Werkzeugträger dienenden Steg aufweisen, wobei die größeren Flächen über eine gerundete Kante in die kleinen Endflächen übergeben, so daß sich an der Längsseite etwa viertelkreisförmig ausgebildete Schneidkanten als Grenzlinie zu den Endflächen im Eckenbereich ergeben, wobei die langen Schneidkanten als Grenzlinien zwischen den größeren Flächen und der jeweils angrenzenden Längsfläche bogenförmig gekrümmt sind, so daß sich ein zur Längsmittel- und zur Quermittelebene spiegelsymmetrischer Körper ergibt.

Ein solcher Schneideinsatz ist beispielsweise aus der DE 295 16 668 U1 bekannt. Dieser Schneideinsatz besitzt vier lange Schneidkanten, die eine konvexe Bogenschliffkontur aufweisen. Die Längsflächen werden an den kurzen Endseiten durch kurze geradlinige Schneidkanten zu den jeweiligen Endflächen hin begrenzt, die über jeweils viertelkreisförmig verlaufende Schneidkantenecken in die langen Schneidkanten übergehen. Damit sämtliche genannten Schneidkanten positive Keilwinkel haben, sind an den Längsseiten im Anschluß an die langen Schneidkanten Spanmulden eingeformt, gleichermaßen sind auch im Bereich der viertelkreisförmigen Schneidkantenecken Mulden angeordnet.

Mehrere solcher Schneideinsätze sollen an einem Fräsmesserkopf umfangsseitig gleichmäßig verteilt angeordnet sein, wobei die Schneideinsätze sowohl an der Umfangsmantelfläche als auch an der Stirnfläche des Werkzeugträgers derart montiert sind, daß die jeweils in Wirkstellung befindlichen Schneiden aller Schneideinsätze in radialer bzw. axialer Richtung spanen können, wobei jedoch die in radialer Richtung über die jeweils in Wirkstellung befindlichen Schneidkanten der an der Stirnfläche des Werkzeugträgers gelegenen Schneideinsätze geringfügig vorstehen, während die jeweils in Wirkstellung befindlichen Schneidkanten der an der Stirnfläche des Werkzeugträgers gelegenen Schneideinsätze in axialer Richtung über die jeweils in Wirkstellung befindlichen Schneidkanten der an der Umfangsmanteifläche des Werkzeugträgers gelegenen Schneidplatten vorstehen.

Um die in der genannten Druckschrift beschriebene Funktion erreichen zu können, muß die Einbaulage folglich radial und axial erfolgen, damit die acht Schneiden nutzbar sind. Nachteiligerweise muß die erste Platte von der nächsten um einen bestimmten Betrag versetzt werden, damit beim einzustellenden Freiwinkel keine Verletzung der Fräskontur durch vorstehende Platten erfolgt. Für das Fräsen von Kurbelwellen ist jedenfalls die genannte Wendeschneidplatte nicht geeignet. Entsprechendes gilt auch für die im wesentlichen gleich gestaltete Schneidplatte nach US-A-3 762 005.

Es ist Aufgabe der vorliegenden Erfindung, einen Schneideinsatz zur tangentialen Einbaulage in einem Fräser zu schaffen, mit dem die Fräserschnittiefe vergrößert werden kann und gleichzeitig eine ausreichende, vom zu bearbeitenden Werkstück weggerichtete Spanabfuhr gewährleistet ist.

Diese Aufgabe wird durch den Schneideinsatz nach Anspruch 1 gelöst.

Erfindungsgemäß bilden hierbei die langen Schneidkanten mit ihrem jeweiligen Ende und die gerundete Kante zwischen der kleinen Endfläche und der größeren Fläche einen Winkel < 90°. Anders ausgedrückt, die lange Schneidkante besitzt einen konkaven Verlauf bzw. im Schneidkantenmittenbereich ein Einschnürung.

Aus der DE 83 17 114.2 U1 ist zwar ein Schneideinsatz bekannt, der in Draufsicht im wesentlichen rechteckig ausgebildet ist und dessen lange Seite der Spanfläche in ihrer Mitte eine gewissen Einschnürung aufweisen, jedoch sind die betreffenden Seitenkanten nicht zum Zerspanen ausgebildet bzw. keine Schneidkanten.

Bei der erfindungsgemäß gewählten Ausbildung kann der mittlere, gegenüber den beidseitigen Schneidkantenenden zurückgesetzte Teil sowohl beim Schneiden mit dem einen wie mit dem anderen Schneidkantenende, also "zweimal" benutzt werden, wenn der beim Fräsen auftretende Hauptverschleiß im Bereich der Schneidenecke liegt. Der erfindungsgemäße Schneideinsatz, der auf einem Fräser tangential befestigt ist, erlaubt es, die häufig bei der Kurbelwellenbearbeitung im Hublagerbereich auftretenden größeren Aufmaße der Wangen so zu überdecken, daß eine Schnittiefe größer als 0,5 x Schneidplattenlänge möglich ist, da, wie bereits erwähnt, sowohl die linke als auch die rechte Schneidkantenhälfte als vollwertige Schneide verwendbar ist und der Mittenbereich von beiden, sowohl linker als auch rechter Schneide verwendet werden kann.

Weiterbildungen der Erfindung sind in den Unteransprüchen 2 bis 4 beschrieben.

Zur Ausbildung der bogenförmigen Krümmung stehen im wesentlichen zwei Varianten zur Wahl: Zum einen können die langen Schneidkanten zumindest teilweise konkav ausgebildet sein oder sie setzen sich aus jeweils unter einem Winkel > 180° aneinan dergrenzender geradliniger Teilstücke zusammen. Wesentlich ist es, daß die grundsätzlich konkave Formgestaltung der langen Schneidkante mit einer Einschnürung, d.h. einem zurückgesetzten Mittenbereich, erhalten bleibt.

Nach einer Weiterbildung der Erfindung ist der mittlere Bereich der langen Schneidkante linear ausgebildet, vorzugsweise über eine Länge bis 1/2 der Schneidkantengesamtlänge.

Nach einer weiteren Ausgestaltung der Erfindung liegt der Seitenspanwinkel zwischen der langen Schneidkante und der gerundeten Kante zwischen 0° und 20°; der Spanwinkel zwischen der größeren Fläche und der Längsseite ist positiv, vorzugsweise liegt er zwischen 0° und 20°. Die konkave Formgestaltung der langen Schneidkante ermöglicht in Verbindung mit dem mittleren Steg die Ausbildung speziell ausgeformter Spankammern. Die Stegbreite sollte 1,5 mm nicht unterschreiten, womit erreicht wird, daß die jeweils beidseitig des Steges liegenden Schneidkanten eine räumliche Trennung voneinander erfahren, wobei der mittlere Steg die jeweils nicht im Eingriff befindliche Schneide vor ablaufenden Spänen schützt und im übrigen als Anlagefläche für den Plattensitz dienen kann. Der Überstand des Steges im mittleren Bereich gegenüber den angrenzenden Flächenbereichen kann positiv oder auch negativ sein, beispielsweise wenn der Schneideinsatz-Sitz konvex ausgeführt ist. Das Längen/Breitenverhältnis der größeren Fläche und damit der jeweiligen langen Schneidkanten zu den (kürzeren) gerundeten Kanten liegt vorzugsweise zwischen 1,2 und 2. Der kürzeste Abstand des Befestigungslochrandes zur langen Schneidkante liegt unter 2 mm.

Um den Bereich der Schneidkante im Eckenbereich zur Vorbeugung von Schneidkantenbrüchen zu stabilisieren wird alternativ ein Schneideinsatz nach Anspruch 5 vorgeschlagen.

Dieser Schneideinsatz hat lange Schneidkanten, die mit ihrem jeweiligen Ende und der gerundeten Kante zwischen der kleinen Endfläche und der größeren Fläche einen Winkel zwischen mehr als 70° und weniger als 90° bilden. Zusätzlich ist mindestens eine der Verbindungsflächen zwischen den größeren Flächen und die kleinen Endflächen eine Ebene, die unter einem Winkel zwischen 90° und 180° zur kleinen Endfläche angeordnet ist und an der Längsseite eine Nebenschneidkante bildet, die somit unter einem Einstellwinkel κ zwischen 0°<κ<90°, vorzugsweise κ = 20° ± 10°, angeordnet ist. Durch die betreffende Abflachung im Eckenbereich unter Ausbildung einer Nebenschneidkante wird die maximale Spanungsdicke entsprechend dem Sinus des Winkels κ reduziert, was entsprechend die Schneidecke stabilisiert.

Ein weiterer Vorteil dieses Schneideinsatzes ergibt sich beispielsweise bei der Hublagerbearbeitung von Kurbelwellen, da der beschriebene Schneideinsatz mit den konkav ausgebildeten langen Schneidkanten und der beschriebenen Nebenschneidkante für Schruppbearbeitungen verwendet werden, denen noch (Schlicht-)Nachbearbeitungen folgen.

Weiterbildungen des Erfindungsgegenstandes sind in Anspruch 6 beschrieben. So bestehen nach einer ersten Ausführungsform die langen Schneidkanten aus jeweils unter einem Winkel von mehr als 180° aneinandergrenzenden Teilstücken, wobei die Länge der zuvor beschriebenen Nebenschneidkante maximal so groß ist wie die Länge jeder der äußeren Teilstücke.

Vorzugsweise grenzen die unter einem Winkel von weniger als 90° angeordnete Ebene und die angrenzenden Flächen über gerundete Kanten aneinander. Der betreffende Kantenradius zwischen der Ebene und der größeren Fläche liegt nach einer weiteren Ausführungsform der Erfindung bei maximal 3 mm. Der Radius zwischen der Ebene und der kleinen Endfläche soll vorzugsweise zwischen 1 mm bis 4 mm liegen.

Gegenstand der Erfindung ist ferner ein Fräswerkzeug, insbesondere Scheibenfräser, mit einer Vielzahl von eingespannten Schneidsätzen, wie es beispielsweise aus der DE 295 16 668 U1 bekannt ist. Allerdings wird bei diesem Fräsmesserkopf bzw. der Schneidplattenbestückung zwischen Schlicht- und Schruppplatten unterschieden.

Zur Schaffung eines Fräswerkzeuges mit radialem Zerspanungsvorschub, wie es insbesondere bei der Kurbelwellenbearbeitung benötigt wird, wird zumindest ein Teil der tangential eingespannten Schneideinsätze entsprechend der vorbeschriebenen Form gewählt. In entsprechender Weise können auch die radial eingespannten Schneideinsätze zumindest zum Teil eine Ausbildung entsprechend den vorbeschriebenen Schneideinsätzen besitzen, vorzugsweise werden jedoch solche Schneideinsätze gewählt, die eine Formgestaltung haben, die der sich aus einer durch einen Schnitt entlang der Längsmittelebene des Schneideinsatzes nach einem der Ansprüche 1 bis 4 ergebenden Hälfte entspricht. Hiermit wird dem Umstand Rechnung getragen, daß bei radialer Einspannung nur mit der Schneidecke einer "kurzen" Schneidkante geschnitten wird. Die hierdurch geschaffene vierschneidige Version besitzt demgemäß dieselben Spanwinkel und Seitenspanwinkel wie die vorgenannte Schneidplatte mit acht Schneiden.

Nach einer weiteren Ausgestaltung des Fräswerkzeuges und zur Lösung der Aufgabe, auch geringe Lagerbreiten bearbeiten zu können, die unter der doppelten Schneideinsatzlänge liegen, aber oberhalb der 1,5-fachen Plattenbreite wird eine Anordnung gewählt, bei der der Werkzeughalter als Scheibe ausgebildet ist und wechselseitig radial und tangential eingespannte Schneideinsätze aufweist. In axialer sowie in radialer Richtung der Scheibe wechseln sich somit tangential und radial eingespannte Schneideinsätze ab, womit die längsaxiale Bauhöhe der Scheibe auf ein Maß unterhalb der doppelten Länge eines Schneideinsatzes wählbar ist.

Nach einer weiteren Ausgestaltung der Erfindung grenzen jeweils stirnseitig Fasen an, womit die Platte (der Schneideinsatz) so frei gemacht wird, daß sie nicht in Fortsetzung der Nebenschneide zum Steg 20 schneidet. Weiterhin kann zur Erhöhung der Stabilität an allen Schneidkanten eine Fase bis zu einer Breite von 0,2 mm und unter einem Fasenwinkel bis zu 20° vorgesehen sein.

Ausführungsbeispiele der Erfindung sind in den Zeichnungen dargestellt. Es zeigen
- Fig. 1: eine perspektivische Ansicht eines erfindungsgemäßen Schneideinsatzes,
- Fig. 2: eine Draufsicht dieses Schneideinsatzes,
- Fig. 3, 4: jeweils Seitenansichten dieses Schneideinsatzes,
- Fig. 5: eine Schneideinsatzversion mit vier nutzbaren Schneiden,
- Fig. 6: eine perspektivische Ansicht eines weiteren erfindungsgemäßen Schneideinsatzes,
- Fig. 7: eine Draufsicht des Schneideinsatzes nach Fig. 6,
- Fig. 8: jeweils Seitenansichten des Schneideinsatzes nach Fig. 6 und 7,
- Fig. 9: eine weitere alternative Ausführungsform des erfindungsgemäßen Schneideinsatzes und
- Fig. 10 bis 13: schematische Darstellungen der Lageanordnung von Schneideinsätzen nach Fig. 1 bis 9 in einem Fräswerkzeug bei der Kurbelwellenbearbeitung.

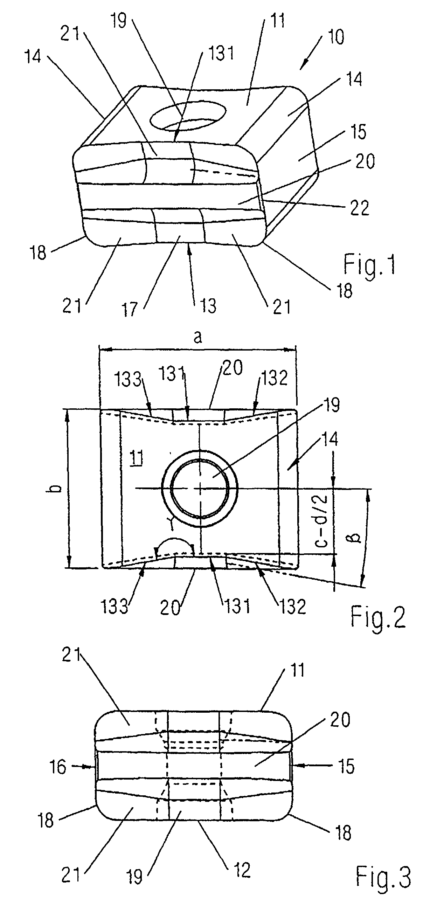

Der als Wendeschneidplatte ausgebildete Schneideinsatz 10 nach Fig. 1 bis 4 besteht aus einem im wesentlichen kubischen Grundkörper, der zwei parallel zueinanderliegende größere Flächen 11 und 12 besitzt, die an den Längsseiten durch lange Schneidkanten 13 begrenzt werden. Jede der langen Schneidkanten besitzt eine mittlere Einschnürung 131, die sich zwischen zwei jeweiligen Schneidkantenenden 132 und 133 befinden. Die Teilstücke 131 bis 133, aus denen sich die lange Schneidkante 13 zusammensetzt, sind jeweils geradlinig, wobei die Schneidkantenenden 132 und 133 mit der gerundeten Kante 14, die jeweils beidseitig die größeren Flächen begrenzt, einen Winkel 90°-β mit 0°<β<20° bilden. Im dargestellten Fall beträgt der Winkel 90°-β = 80°. Die Schneidkantenenden 132 und 133 sind gleich lang, wobei sich ihr Absolutmaß nach den Zerspanungsbedingungen richtet. Der mittlere Bereich 131 der Schneidkante wird jeweils beim Eingriff des Schneidkantenendes 132 oder 133 "mitbenutzt", was möglich ist, weil der Verschleiß bei der Bearbeitung am Schneidkantenende mindestens doppelt so hoch ist wie in der Schneidkantenmitte. Das Verhältnis der Schneidkantenenden 132 oder 133 zu 131 liegt im vorliegenden Fall bei ca. 1 : 1,4, kann jedoch grundsätzlich zwischen 1 : 2 und ohne Mittelbereich gewählt werden. Das Verhältnis der Länge zur Breite a/b liegt erfindungsgemäß zwischen 1,2 und 2.

Die stirnseitigen kleinen Endflächen 15, 16 gehen über eine jeweils gerundete Kante 14 in die größeren Flächen 11, 12 über, wodurch sich auf den Längsflächen 17 jeweils etwa viertelkreisförmig ausgebildete Schneidkanten 18, nämlich vier an jeder Ecke der Längsfläche ergeben. Der Schneideinsatz 10 besitzt ein zentrales Befestigungsloch 19 für eine spannschraube oder einen Kopf für eine Kniehebel- oder Exzenterspannung.

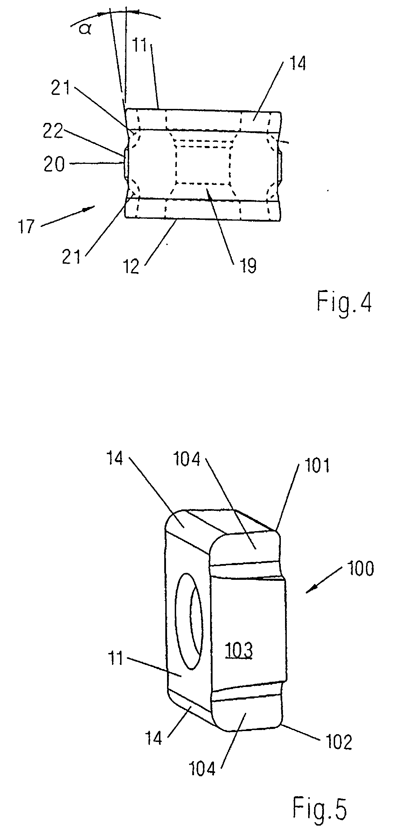

Inmitten der Längsflächen 17, nämlich entlang der Längsachse erstreckt sich über die gesamte Länge ein Steg 20, der gegenüber den angrenzenden Flächenbereichen, d.h. den Spanformmulden 21 um mindestens 2 mm hervorsteht. Der Steg 20 hat eine Breite von mindestens 1,5 mm, um die Stabilität der Platte zu ermöglichen. Wie die Seitenansicht nach Fig. 4 zeigt, ist der Spanwinkel α positiv und liegt im vorliegenden Fall bei etwa 10°. Die Mulden 21 besitzen jeweils im Anschluß an die langen Schneidkanten 13 eine im wesentlichen ebene Flanke, bevor sie über Radius eines Kegelstumpfes als Verbindungsstück zum Steg 20 übergehen.

Die gesamte Ausbildung des Schneideinsatzes ist spiegelsymmetrisch, und zwar in jeder Achsrichtung einer zentralen Schnittebene. Wird der Schneideinsatz nach Fig. 1 bis 4 tangential angeschraubt, so können die häufig im Hublagerbereich beim Kurbelwellenbearbeiten auftretenden größeren Aufmaße der Wangen so überdeckt werden, daß eine Schnittiefe möglich ist, die größer als 0,5 x a ist. Wie bereits erwähnt, kann hierbei der mittlere Bereich 131 der langen Schneidkante 13 sowohl beim Schneiden mit der Schneide 132 als auch mit der Schneide 133 jeweils "mit benutzt" werden.

Die geschilderte, speziell ausgeformte Spankammer (Mulde 21) ist speziell auf den Einbau des Schneideinsatzes in tangentialer Lage ausgestattet. Der Steg 20, zwischen den langen als Hauptschneiden dienenden langen Schneidkanten, trennt zum einen räumlich die langen Schneidkanten 13 voneinander und dient insbesondere als fixierende Anlage beim Einspannen. Der Abstand der Wandung des Loches 19 zur Schneidkante 13 ist an der schmalsten Stelle mindestens 2 mm.

Alternativ und für die Verwendung in einem Fräswerkzeug in radialer Einbaulage ist die im Gegensatz zu der in Fig. 1 bis 4 dargestellten Wendeschneidplatte, die 8 nutzbare Schneiden aufweist, geänderte Version mit nur 4 Schneiden dargestellt. Der Aufbau des Schneideinsatzes 100 entspricht im Detail demjenigen des Schneideinsatzes 10 mit der Maßgabe, daß etwa entlang der Längsmittelebene, d.h. in Höhe der Stege 20 ein Schnitt gelegt wird (wobei selbstverständlich die Kanten 101, 102 abgerundet sind. Genauso wie beim 8-schneidigen Schneideinsatz nach Fig. 1 bis 4 ist der mittlere Bereich 103 der Spanformmulde in Form eines Steges ausgebildet, der eine gegenüber der randseitigen Spanformmulde 104 vorstehende Form aufweist, wobei dieser Steg aus Platzgründen wesentlich größer als 1,5 mm ausgeführt ist.

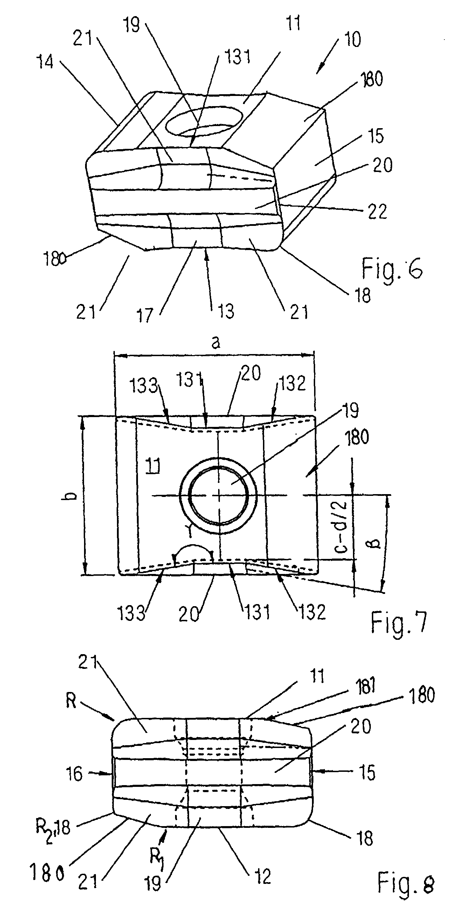

Der als Wendeschneidplatte ausgebildete Schneideinsatz 10 nach Fig. 6 bis 9 besteht aus einem im wesentlichen kubischen Grundkörper, der zwei parallel zueinanderliegende größere Flächen 11 und 12 besitzt, die an den Längsseiten durch lange Schneidkanten 13 begrenzt werden. Jede der langen Schneidkanten besitzt eine mittlere Einschnürung 131, die sich zwischen zwei jeweiligen Schneidkantenenden 132 und 133 befinden. Die Teilstücke 131 bis 133, aus denen sich die lange Schneidkante 13 zusammensetzt, sind jeweils geradlinig, wobei die Schneidkantenenden 132 und 133 mit der gerundeten Kante 14 bzw. der ebenen Fläche 180, die jeweils beidseitig die größeren Flächen begrenzen, einen Winkel 90°-β mit 0°<β<20° bilden. Im dargestellten Fall beträgt der Winkel 90°-β = 80°. Die Schneidkantenenden 132 und 133 sind gleich lang, wobei sich ihr Absolutmaß nach den Zerspanungsbedingungen richtet. Der mittlere Bereich 131 der Schneidkante wird jeweils beim Eingriff des Schneidkantenendes 132 oder 133 "mitbenutzt", was möglich ist, weil der Verschleiß bei der Bearbeitung am Schneidkantenende mindestens doppelt so hoch ist wie in der Schneidkantenmitte. Das Verhältnis der Schneidkantenenden 132 oder 133 zu 131 liegt im vorliegenden Fall bei ca. 1 : 1,4, kann jedoch grundsätzlich zwischen 1 : 2 und ohne Mittelbereich gewählt werden.

Das Verhältnis der Länge zur Breite a/b liegt erfindungsgemäß zwischen 1,2 und 2.

Die stirnseitigen kleinen Endflächen 15, 16 gehen an einer Seite über eine jeweils gerundete Kante 14 in die größeren Flächen 11, 12 über, wodurch sich auf den Längsflächen 17 jeweils etwa viertelkreisförmig ausgebildete Schneidkanten 18, nämlich zwei an jeder Ecke der Längsfläche ergeben. An den verbleibenden gegenüberliegenden Seiten weist der Schneideinsatz eine abgeschrägte Fläche 180 auf, die eben ausgebildet ist und unter einem stumpfen Winkel zur kleinen Endfläche angeordnet ist. Diese Fläche 180 geht über gerundete Kanten in die benachbart liegenden Flächen 15 bzw. 16 und 11 bzw. 12 über. Der aus Fig. 8 ersichtliche Radius R₂, der auch dem Radius R für die abgerundete Kante 18 entspricht, ist 1.6 mm, wohingegen der Radius R₁ 1,6 mm gewählt wird.

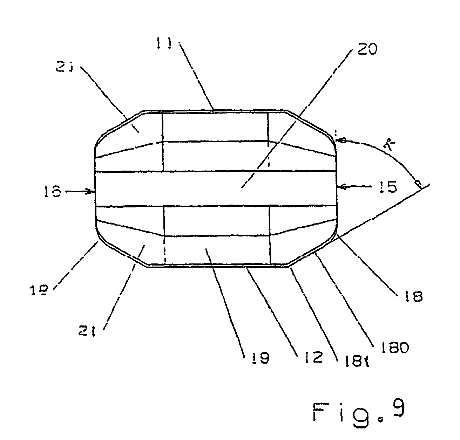

Der Schneideinsatz nach Fig. 9 unterscheidet sich von dem Schneideinsatz nach Fig. 6 bis 8 dadurch, daß in jedem der Eckenbereiche jeweils schräg liegende Verbindungsflächen 180 vorliegen, deren Verlängerung mit der jeweiligen Endfläche 15 bzw. 16 einen Winkel κ von mehr als 0° und weniger als 90° bildet. Die Bemaßung der Radien R₁ bzw. R₂ entspricht der zu Fig. 8 beschriebenen.

Der Schneideinsatz 10 besitzt ein zentrales Befestigungsloch für eine Spannschraube oder einen Kopf für eine Kniehebel- oder Exzenterspannung.

Inmitten der Längsflächen 17, nämlich entlang der Längsachse erstreckt sich über die gesamte Länge ein Steg 20, der gegenüber den angrenzenden Flächenbereichen, d.h. den Spanformmulden 21 um mindestens 2 mm hervorsteht. Der Steg 20 hat eine Breite von mindestens 1,5 mm, um die Stabilität der Platte zu ermöglichen. Der durch die Mulden 21 gebildete Spanwinkel ist positiv und liegt im vorliegenden Fall bei etwa 10°. Die Mulden 21 besitzen jeweils im Anschluß an die langen Schneidkanten 13 eine im wesentlichen ebene Flanke, bevor sie über Radius eines Kegelstumpfes als Verbindungsstück zum Steg 20 übergehen.

Die gesamte Ausbildung des Schneideinsatzes nach Fig. 9 ist spiegelsymmetrisch, und zwar in jeder Achsrichtung einer zentralen Schnittebene. Wird der Schneideinsatz nach Fig. 6 bis 9 tangential angeschraubt, so können die häufig im Hublagerbereich beim Kurbelwellenbearbeiten auftretenden größeren Aufmaße der Wangen so überdeckt werden, daß eine Schnittiefe möglich ist, die größer als 0,5 x a ist. Wie bereits erwähnt, kann hierbei der mittlere Bereich 131 der langen Schneidkante 13 sowohl beim Schneiden mit der Schneide 132 als auch mit der Schneide 133 jeweils "mit benutzt" werden.

Die geschilderte, speziell ausgeformte Spankammer (Mulde 21) ist speziell auf den Einbau des Schneideinsatzes in tangentialer Lage ausgestattet. Der Steg 20, zwischen den langen als Hauptschneiden dienenden langen Schneidkanten, trennt zum einen räumlich die langen Schneidkanten 13 voneinander und dient insbesondere als fixierende Anlage beim Einspannen. Der Abstand der Wandung des Loches 19 zur Schneidkante 13 ist an der schmalsten Stelle mindestens 2 mm. Im Gegensatz zu viertelkreisförmig ausgebildeten Ecken 18 wird durch die Kanten 180 die maximale Spanungsdicke h = f_{c} · sin κ reduziert und damit die Bruchgefährdung dieser Schneidkante herabgeetzt werden. Die Platte nach Fig. 9 kann in den Bereichen 132, 131, 133 und 180 eine Schruppbearbeitung ausführen.

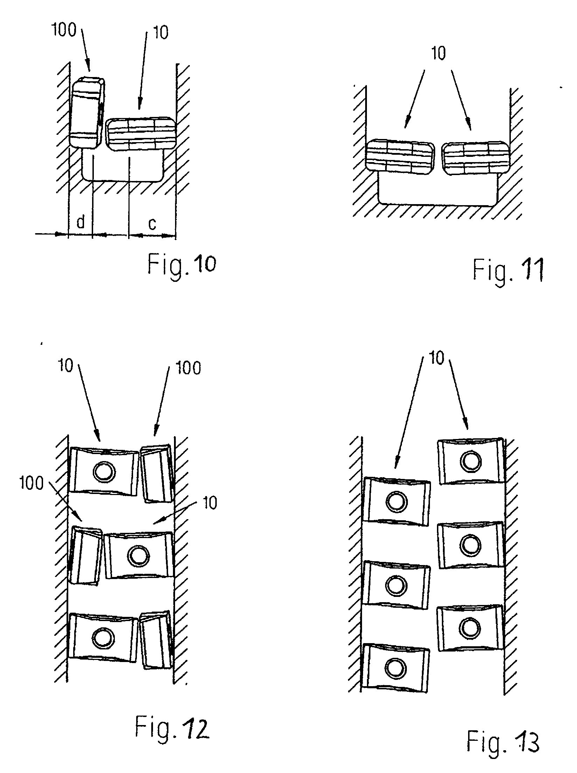

Der Schneideinsatz nach Fig. 5 ist zum Einspannen in radialer Einbaulage vorgesehen, insbesondere in einem Fräswerkzeug, bei dem alternierend hinter- und nebeneinander Schneideinsätze in tangentialer und radialer Einbaulage angeordnet sind. Dies ist am Beispiel der Fig. 10 verdeutlicht, die die beiden Schneideinsätze 10 und 100 in tangentialer und radialer Einbaulage beim radialen Schnittvorschub zeigt. Der Schneideinsatz 100 besitzt hierbei eine größtmögliche Schneidtiefe d, die im wesentlichen durch das Maß der kurzen Kante bestimmt ist bzw. hierunter liegt. Durch die aus Fig. 10 und 11 ersichtliche abwechselnde Einbauweise der 4- und der 8-Schneiden-Platten wird eine Schnittbreite "c" (Fig. 10) erreicht. Die maxiamle Schneidtiefe des Schneideinsatzes 100 in tangentialer Baulage (Maß c) entspricht etwa der Summe der Länge der Schneidkantenabschnitte 132 oder 133 und 131.

Mit der nach Fig. 10 gewählten Anordnung ist es möglich, eine Fräser-Schnittbreite pro Fräshälfte zu schaffen, die maximal der Summe der Längen der Schneidkantenabschnitte 132 oder 133 und 131 beträgt.

Fig. 11 zeigt eine um 90° versetzte Darstellung der Schneidplattenanordnung nach Fig. 10, die zeigt, daß die Schneideinsätze 10 und 100 jeweils alternierend in abwechselnder Folge umfangsseitig und nebeneinanderliegend angeordnet sind.

Bei größeren Schnittbreiten (> 2a) kann ein Fräswerkzeug mit einer Anordnung von Schneideinsätzen 10 gewählt werden, die Fig. 12 und 13 zu entnehmen ist. Die Schneideinsätze 10 sind in diesem Falle hinter- und nebeneinander umfangsseitig auf einem scheibenförmigen Werkzeughalter angeordnet, vorzugsweise dergestalt, daß die hintereinander angeordneten Schneideinsätze einer Reihe gegenüber den Schneideinsätzen der parallel angeordneten Reihe auf Lücke versetzt angeordnet sind. Wie auch aus Fig. 10 (Maß c) ersichtlich, kann in tangentialer Einbaulage durch die Gestaltung der langen Schneidkante und die gewählte positive Schnittgeometrie eine gegenüber den aus dem DE 295 16 668 U1 oer US-A-3 762 005 größere Schnittiefe realisiert werden. Dazu ist eine strenge Unterscheidung zwischen Schlicht- und Schruppplatte bei einem Fräser, wie dies bei der Ausführung nach DE 295 16 668 U1 der Fall ist, nicht erforderlich, einheitlich können die Schneideinsätze 10 in tangentialer Baulage verwendet werden. Die Ausführungsform nach Fig. 10 und 11 ist nur eine scheinbare Ausnahme. Der in tangentialer Einbaulage eingesetzte Schneideinsatz 10 wird lediglich aus Platzgründen durch einen radial eingebauten Schneideinsatz 100, der dem "halben" Schneideinsatz 10 entspricht, komplettiert. Jedenfalls ist es nicht erforderlich, die erste Platte von der nächsten um einen bestimmten Betrag versetzt anzuordnen.

### Bezugszeichenliste

- 10: Schneideinsatz
- 11, 12: größere Flächen
- 13: lange Schneidkanten
- 131: mittlerer Schneidkantenabschnitt
- 132, 133: Schneidkantenenden
- 14: gerunde Kante
- 15, 16: kleine stirnseitige Endflächen
- 17: Längsfläche
- 18: viertelkreisförmige Schneidkante
- 19: Befestigungsloch
- 20: Steg
- 21: Mulde
- 100: Schneideinsatz zur radialen Einspannung
- 101, 102: Schneidenecken
- 103: Mulde im mittleren Bereich einer Längsseite
- 104: Mulde im Randbereich einer Längsseite
- α: Spanwinkel
- β: Seitenspanwinkel
- γ: Winkel zwischen Flächenabschnitten 131 bis 133
- κ: Komplementärwinkel zum Winkel, den die Verbindungsfläche 180 mit der Endfläche 15 bzw. 16 bildet
- a: Schneideinsatzlänge
- b: Schneideinsatzbreite
- c: Schneidtiefe des tangential eingespannten Schneideinsatzes 10
- d: Schneidtiefe des radial eingespannten Schneideinsatzes 100

## Patentansprüche

1. Schneideinsatz (10) mit einem im wesentlichen kubischen Grundkörper, der als Wendeschneidplatte mit achtnutzbaren Schneidkanten ausgestattet ist,
mit zwei parallel zueinander angeordneten, ebenen und von einem Befestigungsloch (19) durchdrungenen größeren Flächen (11, 12) und vier hieran jeweils angrenzenden Seitenflächen, nämlich zwei parallel zueinanderliegenden stirnseitigen kleinen Endflächen (15, 16) und größeren Längsflächen (17), die jeweils mittig entlang ihrer Längsachse einen vorstehenden und als Anlagefläche beim Einspannen des Schneideinsatzes (10) in einen Werkzeugträger dienenden Steg (20) aufweisen,
wobei die größeren Flächen (11, 12) über eine gerundete Kante (14) in die kleinen Endflächen (15, 16) übergehen, so daß sich an der Längsseite (17) etwa viertelkreisförmig ausgebildete Schneidkanten (18) als Grenzlinien zu den Endflächen (15, 16) im Eckenbereich ergeben,
wobei die langen Schneidkanten (13) als Grenzlinien zwischen den größeren Flächen (11, 12) und der jeweils angrenzenden Längsfläche (17) bogenförmig gekrümmt sind, so daß sich ein zur Längsmittel- und zur Quermittelebene spiegelsymmetrischer Körper ergibt,
**dadurch gekennzeichnet,**
daß die langen Schneidkanten (13) mit ihrem jeweiligen Ende und die gerundete Kante (14) zwischen der kleinen Endfläche und der größeren Fläche einen Winkel 70°<(90°-β) <90° bilden.

2. Schneideinsatz nach Anspruch 1, dadurch gekennzeichnet, daß die langen Schneidkanten konkav ausgebildet sind oder sich aus jeweils unter einem Winkel (γ) > 180° aneinandergrenzenden Teilstücken (131 bis 133) zusammensetzen, die vorzugsweise verrundet ausgeführt sind und/oder deren mittlerer Bereich (131) linear ausgestaltet ist, vorzugsweise über eine Länge bis 1/2 der Schneidkantengesamtlänge.

3. Schneideinsatz nach einem der Ansprüche 1 oder 2, dadurch gekennzeichnet, daß der Spanwinkel (α) zwischen der Vertikalen und der Muldenorientierung (21) zwischen 0°<α<20° liegt und/oder daß der Seitenspanwinkel (β) zwischen den kleineren stirnseitigen Endflächen (15, 16) und den Schneidkantenenden (132, 133) zwischen 0° und 20° liegt und/oder daß die Breite des Steges (20) im mittleren Bereich mindestens 1,5 mm beträgt.

4. Schneideinsatz nach einem der Ansprüche 1 bis 3, dadurch gekennzeichnet, daß das Längen/Breitenverhältnis (a/b) der größeren Fläche (11, 12) und damit der jeweiligen langen Schneidkanten (13) zu den kürzeren gerundeten Kanten (14) zwischen 1,2 und 2 liegt und/oder daß der kürzeste Abstand (c) des Befestigungslochrandes zur langen Schneidkante (13) unter 2 mm liegt.

5. Schneideinsatz (10) mit einem im wesentlichen kubischen Grundkörper, der als Wendeschneidplatte mit achtnutzbaren Schneidkanten ausgestattet ist,
mit zwei parallel zueinander angeordneten, ebenen und von einem Befestigungsloch (19) durchdrungenen größeren Flächen (11, 12) und vier hieran jeweils angrenzenden Seitenflächen, nämlich zwei parallel zueinanderliegenden stirnseitigen kleinen Endflächen (15, 16) und größeren Längsflächen (17), die jeweils mittig entlang ihrer Längsachse einen vorstehenden und als Anlagefläche beim Einspannen des Schneideinsatzes (10) in einen Werkzeugträger dienenden Steg (20) aufweisen,
wobei die größeren Flächen (11, 12) über Verbindungsflächen (180) oder eine gerundete Kante (14) in die kleinen Endflächen (15, 16) übergehen, so daß sich an der Längsseite (17) entsprechend ausgebildete Schneidkanten (18) als Grenzlinien zu den Endflächen (15, 16) im Eckenbereich ergeben,
wobei die langen Schneidkanten (13) als Grenzlinien zwischen den größeren Flächen (11, 12) und der jeweils angrenzenden Längsfläche (17) bogenförmig gekrümmt sind, so daß sich ein zur Längsmittel- und zur Quermittelebene spiegelsymmetrischer Körper ergibt,
**dadurch gekennzeichnet,**
daß die langen Schneidkanten (13) mit ihrem jeweiligen Ende und die gerundete Kante (14) zwischen der kleinen Endfläche und der größeren Fläche einen Winkel 70°<(90°-β) <90° bilden und daß mindestens eine der Verbindungsflächen (180) zwischen den größeren Flächen (11, 12) und den kleineren Endflächen (15, 16) eine Ebene ist, die unter einem stumpfen Winkel <180° zur kleinen Endfläche (15, 16) angeordnet ist und an der Längsseite eine Nebenschneidkante (180) bildet.

6. Schneideinsatz nach Anspruch 5, dadurch gekennzeichnet, daß sich die langen Schneidkanten aus jeweils unter einem Winkel (γ) > 180° aneinandergrenzenden Teilstücken (131 bis 133) zusammensetzen und daß die Länge der Nebenschneidkante (180) maximal so groß ist wie die Länge jeder der äußeren Teilstücke (132, 133) und/oder daß die unter einem Winkel (κ) angeordnete Ebene und die angrenzenden Flächen über gerundete Kanten aneinandergrenzen, wobei vorzugsweise der Radius (R₁) zwischen der Ebene und der größeren Fläche (12) zwischen 0<R₁≤3 mm und/oder der Radius R₂, zwischen der Ebene und der kleinen Endfläche (15, 16) zwischen 1 mm<R₂≤4 mm liegen.

7. Fräswerkzeug mit einer Vielzahl von eingespannten Schneideinsätzen, dadurch gekennzeichnet, daß zumindest ein Teil der tangential eingespannten Schneideinsätze (10) nach einem der Ansprüche 1 bis 6 ausgebildet ist.

8. Fräswerkzeug nach Anspruch 7, dadurch gekennzeichnet, daß zusätzlich Schneideinsätze (100) radial eingespannt sind, von denen zumindest ein Teil nach einem der Ansprüche 1 bis 4 ausgebildet ist oder eine Ausgestaltung besitzen, die der sich aus einer durch einen Schnitt entlang der Längsmittelebene des Schneideinsatzes (10) nach einem der Ansprüche 1 bis 4 ergebenden Hälfte entspricht.

9. Fräswerkzeug nach Anspruch 7 oder 8, dadurch gekennzeichnet, daß der Werkzeughalter als Scheibe ausgebildet ist und wechselseitig radial und tangential eingespannte Schneideinsätze (10, 100) aufweist, wobei die Scheibenbreite kleiner als die doppelte Länge des Schneideinsatzes (10) nach einem der Ansprüche 1 bis 4 ist.

10. Fräswerkzeug nach einem der Ansprüche 7 bis 9, dadurch gekennzeichnet, daß die an den Steg (20) angrenzenden Flächen als Fase (22) ausgebildet sind und/oder daß eine an die Schneidkanten angrenzende Fase mit einer Breite bis zu 0,2 mm und einem Fasenwinkel zwischen 0° und 20° besitzt.

## Claims

1. Cutting insert (10) with a substantially cubic base body which is formed as an indexable insert with eight usable cutting edges, with two mutually parallel planar large faces (11, 12) pierced by a clamping hole (19) and four side faces bounding each of the larger faces, namely two mutually parallel small end faces (15, 16) at the front and larger longitudinal faces (17) which have, along their longitudinal axis, midway each a projecting rib (20) serving as a mounting surface upon the clamping of the cutting insert (10) in a tool carrier, whereby the large faces (11, 12) pass over a rounded edge (14) into the smaller end faces (15, 16), so that at the longitudinal sides (17) approximately one-quarter circular shaped cutting edges (18) are formed as boundary lines to the end faces (15, 16) in the corner region, whereby the long cutting edges (13) are formed as boundary lines between large faces (11, 12) and the respective bounding longitudinal face (17) are curved arcuately so that a body results which is mirror symmetrical to the longitudinal median plane and to the transverse median plane, characterized in that the long cutting edges (13) with their respective ends and the rounded edges (14) between the small end faces and the large faces, form an angle 70°< 90° - β) < 90°.

2. Cutting insert according to claim 1, characterized in that the long cutting edges are formed as concave or as assembled from segments (131 to 133) adjoining one another at an angle (γ) > 180°, said cutting edge segments (131 to 133) are preferably rounded and/or in that their intermediate region (131) is formed rectilinear, preferably over a length up to one-half the total length of the cutting edge.

3. Cutting insert according to claims 1 or 2, characterized in that the rake angle (α) between the vertical and the trough orientation (21) lies between 0° < α < 20° and/or that the lateral rake angle (β) between the small end-side end faces (15, 16) and the cutting edge ends (132, 133) lies between 0° and 20° and/or that the width of the rib (20) in its intermediate region is at least 1,5 mm.

4. Cutting insert according to claims 1 to 3, characterized in that the length/width ratio (a/b) of the large faces (11, 12) at the respective long cutting edges (13) to the short rounded edges (14) lies between 1,2 and 2 and/or that the shortest distance (c) of the clamping hole edge to the longer cutting edges (13) lies below 2 mm.

5. Cutting insert (10) with a substantially cubic base body which is formed as an indexable insert with eight useable cutting edges, with two mutually parallel planar large faces (11, 12) pierced by a clamping hole (19) and four side faces respectively bounding same, namely two mutually parallel end side small end faces (15, 16) and large longitudinal faces (17) which have, along their longitudinal axes, midway each a projecting rib (20) serving as a mounting surface upon the clamping of the cutting insert (10), whereby the large faces (11, 12) pass over connecting faces (180) or over a rounded edge (14) in the small end faces (15, 16) so that at the longer sides (17) correspondingly shaped cutting edges (18) are provided as boundary lines for the end faces (15, 16) in corner regions, whereby the long cutting edges (13) are arcuately curved as boundary lines between the large faces (11, 12) and the longitudinal face (17) bounding same so a body which is mirror symmetrical to a longitudinal median plane and to a transverse median plane is formed, characterized in that the long cutting edges (13) with their respective ends and the rounded edges (14) between the small end faces and the large faces form an angle of 70° < (90° - β) < 90° and in that at least one of the connecting faces (180) between the large faces (11, 12) and the smaller end faces (15, 16) is a plane which forms an obtuse angle > 180° with the small end face (15, 16) and which forms on the longitudinal side, an auxiliary cutting edge (180).

6. Cutting insert according to claim 5, characterized in that the long cutting edges are assembled respectively from portions (131 - 133) angularly adjoining one another at angles (γ) > 180° and the lengths of the auxiliary cutting edges (180) is at a maximum as large as the length of each of the outer portions (132, 133) and/or that the plane oriented at an angle (κ) and the face bounded thereby transition with one another via rounded edges, whereby preferably the radius (R₁) between the plane and the larger face (12) is 0 < R₁ ≤ 3 mm and/or the radius R₂ between the plane and the smaller end face (15, 16) lies between 1 mm < R₂ ≤ 4 mm.

7. Milling tool with a multiplicity of clamped cutting inserts characterized in that at least a portion of the inserts are tangentially clamped cutting inserts (10) according to one of claims 1 to 6.

8. Milling tool according to claim 7, characterized in that the additional cutting inserts (100) are radially clamped and at least a portion of them are configured according to one of claims 1 to 4 or form a shape corresponding to a cut through the cutting insert (10) along the longitudinal median plane to form a respective half according to one of claims 1 to 4.

9. Milling tool according to claim 7 or 8, characterized in that the tool holder is configured as a disk and has alternating radial and tangential clamped cutting inserts (10, 100), whereby the disk width is smaller then twice the length of the cutting insert (10) according to one of claims 1 to 4.

10. Milling tool according to one of claims 7 to 9, characterized in that a surface bounding the rib (20) is configured as a bevel (22) and/or that the bevel bounding the cutting edge has a width up to 0,2 mm and a bevel angel between 0° and 20°.

## Revendications

1. Insert de coupe (10) avec un corps de base pour l'essentiel cubique qui est réalisé comme plaquette réversible avec huit tranchants utilisables,
avec deux surfaces planes plus grandes (11, 12) disposées parallèlement l'une à l'autre et percées d'un trou de fixation (19) et avec quatre faces latérales respectivement contiguës à ces premières, à savoir deux petites surfaces terminales frontales (15, 16) parallèles entre elles et des surfaces longitudinales plus grandes (17) qui présentent, respectivement au milieu le long de leur axe longitudinal, une entretoise (20) saillante qui sert de surface d'appui lors du serrage de l'insert de coupe (10) dans un support d'outils,
les surfaces plus grandes (11, 12) débouchant par une arête arrondie (14) dans les petites surfaces terminales (15, 16), de sorte que, sur le grand côté (17), des tranchants (18) à peu près en forme de quart de cercle sont formés comme lignes limites vers les surfaces terminales (15, 16) dans la zone du coin,
les longs tranchants (13) comme lignes limites entre les surfaces plus grandes (11, 12) et la surface longitudinale respectivement contiguë (17) étant courbés de manière arquée, de sorte que l'on obtient un corps à symétrie spéculaire par rapport au plan médian longitudinal et au plan médian transversal,
**caractérisé par le fait que**
les longs tranchants (13) avec leur extrémité respective et l'arête arrondie (14) entre la petite surface terminale et la surface plus grande forment un angle 70°<(90°-β)<90°.

2. Insert de coupe selon la revendication 1, caractérisé par le fait que les longs tranchants sont réalisés de manière concave ou se composent de portions (131 à 133) respectivement contiguës l'une à l'autre sous un angle (γ) > 180°, qui, de préférence, sont arrondies et/ou dont la zone centrale (131) est réalisée de façon linéaire, de préférence sur une longueur allant jusqu'à 1/2 de la longueur totale du tranchant.

3. Insert de coupe selon l'une des revendications 1 ou 2, caractérisé par le fait que l'angle de coupe (α) entre la verticale et l'orientation du creux (21) est compris entre 0°<α<20° et/ou que l'angle de coupe latérale (β) entre les surfaces terminales frontales plus petites (15, 16) et les extrémités de tranchant (132, 133) est compris entre 0° et 20° et/ou que la largeur de l'entretoise (20) dans la zone centrale est de 1,5 mm du moins.

4. Insert de coupe selon l'une des revendications 1 à 3, caractérisé par le fait que le rapport longueur/largeur (a/b) des surfaces plus grandes (11, 12) et ainsi des longs tranchants respectifs (13) aux arêtes arrondies plus courtes (14) est compris entre 1,2 et 2, et/ou que la distance la plus courte (c) du bord du trou de fixation au tranchant long (13) est inférieure à 2 mm.

5. Insert de coupe (10) avec un corps de base pour l'essentiel cubique qui est réalisé comme plaquette réversible avec huit tranchants utilisables,
avec deux surfaces planes plus grandes (11, 12) disposées parallèlement l'une à l'autre et percées d'un trou de fixation (19) et avec quatre faces latérales respectivement contiguës à ces premières, à savoir deux petites surfaces terminales frontales (15, 16) parallèles entre elles et des surfaces longitudinales plus grandes (17) qui présentent, respectivement au milieu le long de leur axe longitudinal, une entretoise (20) saillante qui sert de surface d'appui lors du serrage de l'insert de coupe (10) dans un support d'outils,
les surfaces plus grandes (11, 12) débouchant par des surfaces de jonction (180) ou une arête arrondie (14) dans les petites surfaces terminales (15, 16), de sorte que, sur le grand côté (17), on obtient des tranchants (18) formés de manière correspondante, comme lignes limites vers les surfaces terminales (15, 16) dans la zone du coin,
les longs tranchants (13) comme lignes limites entre les surfaces plus grandes (11, 12) et la surface longitudinale respectivement contiguë (17) étant courbés de manière arquée, de sorte que l'on obtient un corps à symétrie spéculaire par rapport au plan médian longitudinal et au plan médian transversal,
**caractérisé par le fait que**
les longs tranchants (13) avec leur extrémité respective et l'arête arrondie (14) entre la petite surface terminale et la surface plus grande forment un angle 70°<(90°-β)<90° et que du moins une des surfaces de jonction (180) entre les surfaces plus grandes (11, 12) et les surfaces terminales plus petites (15, 16) est un plan qui est disposé sous un angle obtus < 180° par rapport à la petite surface terminale (15, 16) et qui forme sur le grand côté un tranchant secondaire (180).

6. Insert de coupe selon la revendication 5, caractérisé par le fait que les longs tranchants se composent de portions (131 à 133) respectivement contiguës l'une à l'autre sous un angle (γ) > 180° et que la longueur du tranchant secondaire (180) est au maximum aussi grande que la longueur de chacune des portions extérieures (132, 133) et/ou que le plan disposé sous un angle (κ) et les surfaces contiguës se rencontrent par des arêtes arrondies, de préférence le rayon (R₁) entre le plan et la surface plus grande (12) étant compris entre 0<R₁≤3 mm et/ou que le rayon R₂ entre le plan et la petite surface terminale (15, 16) étant compris entre 1 mm<R₂≤4 mm.

7. Outil de fraisage avec une multiplicité d'inserts de coupe serrés, caractérisé par le fait qu'une partie au moins des inserts de coupe (10) serrés de façon tangentielle est réalisée selon l'une des revendications 1 à 6.

8. Outil de fraisage selon la revendication 7, caractérisé par le fait que, en sus, il y a des inserts de coupe (100) serrés de façon radiale, dont une partie au moins est réalisée selon l'une des revendications 1 à 4, ou ils présentent une configuration qui correspond à la moitié résultant d'une coupe le long du plan médian longitudinal de l'insert de coupe (10) selon l'une des revendications 1 à 4.

9. Outil de fraisage selon la revendication 7 ou 8, caractérisé par le fait que le porte-outils est réalisé comme disque et présente des inserts de coupe (10, 100) serrés, en alternance, de façon radiale et de façon tangentielle, la largeur du disque étant plus petite que la double longueur de l'inesrt de coupe (10) selon l'une des revendications 1 à 4.

10. Outil de fraisage selon l'une des revendications 7 à 9, caractérisé par le fait que les surfaces qui sont contiguës à l'entretoise (20) sont réalisées comme chanfrein (22), et/ou qu'un chanfrein contigu aux tranchants présente une largeur allant jusqu'à 0,2 mm et un angle de chanfrein qui est compris entre 0° et 20°.
